# EUROPÄISCHE PATENTSCHRIFT

(11) **EP 4 152 737 B1**
(45) Veröffentlichungstag und Bekanntmachung des Hinweises auf die Patenterteilung: **12.03.2025**
(21) Anmeldenummer: 21197794.7
(22) Anmeldetag: 20.09.2021
(51) Int. Cl.: H04N 1/60, B41M 1/10

(54) **VERFAHREN ZUR ERZEUGUNG VON GRAVURDATEN FÜR DIE GRAVUR VON DRUCKZYLINDERN**
METHOD FOR GENERATING ENGRAVING DATA FOR ENGRAVING PRINTING CYLINDERS
PROCÉDÉ DE GÉNÉRATION DE DONNÉES DE GRAVURE POUR LA GRAVURE DE CYLINDRES DE PRESSION

(43) Veröffentlichungstag der Anmeldung: 22.03.2023
(73) Patentinhaber: SURTECO GmbH, 86647 Buttenwiesen (DE)
(72) Erfinder: MARCZAK, Adrian, 89443 Schwenningen (DE)
(74) Vertreter: Andrejewski - Honke Patent- und Rechtsanwälte Partnerschaft mbB

(56) Entgegenhaltungen:
- EP-A1- 3 020 565
- US-A1- 2016 301 829

## Beschreibung

Die Erfindung betrifft ein Verfahren zur Erzeugung von Gravurdaten für die Gravur von Druckzylindern und ein Verfahren zum Herstellen von Druckzylindern einer Druckmaschine sowie ein Verfahren zum Drucken von Dekoren mit solchen Druckzylindern, und zwar für den subtraktiven Mehrfarb-Analogdruck von Oberflächendekoren auf flächige Träger, z. B. Folien oder Papiere. Außerdem betrifft die Erfindung ein Verfahren zur Erzeugung von Druckdaten für den Druck von Oberflächendekoren, wobei einerseits Digitaldruckdaten für einen Digitaldruck und andererseits Gravurdaten für die Gravur von Druckzylindern für den Mehrfarb-Analogdruck (desselben Dekors) erzeugt werden. Die Erfindung betrifft insbesondere den Druck von Dekoren für die Oberflächenveredelung von plattenförmigen Werkstücken, z. B. Möbelplatten, Arbeitsplatten, Bodenplatten oder Wand- und Deckenverkleidungsplatten. Bei den Dekoren kann es sich z. B. um Holzdekore bzw. Dekore für die Nachbildung von Holzwerkstoffen oder anderen natürlichen oder künstlichen Werkstoffen wie z. B. Steinplatten oder dergleichen handeln. Dazu werden z. B. Dekorpapiere oder Dekorfolien mit einem bestimmten Dekor bedruckt und diese Papiere oder Folien werden in einem weiteren Verfahrensschritte auf die Trägerplatte aufgebracht. Die Erfindung umfasst aber auch das direkte Bedrucken von plattenförmigen Werkstoffen, z. B. von Holzwerkstoffplatten oder anderen Trägerplatten.

Das Bedrucken von Dekorpapieren oder Dekorfolien erfolgt in der Praxis in der Regel durch einen Mehrfarb-Analogdruck, insbesondere in einem (Rotations-) Tiefdruckverfahren mit mehreren gravierten Druckzylindern, die jeweils mit einer Druckfarbe eingefärbt werden. Der Analogdruck mit Druckzylindern ermöglicht einen besonders wirtschaftlichen Druck mit hoher Qualität, und zwar insbesondere in einer Massenproduktion. Für jedes einzelne Dekor sind eigene Druckzylinder herzustellen, sodass solche Druckverfahren in der Regel für die Herstellung von Dekoren in großen Mengen eingesetzt werden.

Alternativ lassen sich Dekore auch im Digitaldruckverfahren drucken. Nachteilig sind in der Massenproduktion die deutlich höheren Kosten im Vergleich zu herkömmlichen Analog-Druckverfahren, wie z. B. dem Tiefdruckverfahren. Ein wesentlicher Vorteil des Digitaldrucks ist die Möglichkeit, schnell und einfach neue Dekore ohne eine aufwendige Herstellung von Druckzylindern drucken zu können, sodass sich das Digitaldruckverfahren insbesondere für die Produktion geringer Mengen anbietet.

In der Praxis werden ständig eine Vielzahl neuer Dekore entwickelt, von denen dann jedoch nur einige wenige Eingang in die Massenproduktion finden. Es besteht das Bedürfnis, für neue Dekore zunächst Muster in geringen Mengen im Wege des Digitaldrucks herzustellen. Stellt sich heraus, dass ein bestimmtes Dekor in größeren Mengen produziert werden soll und z. B. in eine Massen- oder Serienproduktion überführt werden soll, so werden für dieses Dekor die Druckzylinder für das Tiefdruckverfahren hergestellt. Dabei stellt sich in der Praxis das Problem der Vergleichbarkeit der im Digitaldruck erzeugten Dekore einerseits und der im Analogdruck erzeugten Dekore andererseits. Aufgrund der sehr unterschiedlichen Eigenarten des jeweiligen Produktionsprozesses sind die für den Digitaldruck erzeugten Druckdaten für einen Analogdruck bzw. für die Gravur von Druckzylindern in der Regel nur bedingt geeignet. Es fehlt häufig an einer ausreichenden Vergleichbarkeit der Ergebnisse. Dieses hängt unter anderem damit zusammen, dass im Digitaldruck meist mit Grundfarben/Skalenfarben, z. B. in einem CMYK-Farbraum gearbeitet wird. Demgegenüber erfolgt der Druck von Oberflächendekoren in den herkömmlichen Tiefdruckverfahren in der Regel mit Sonderfarben (Mischfarben), die aus Gründen der Qualität und aus Kostengründen an das jeweilige Dekor angepasst sein können. So werden z. B. Dekore für die Nachbildung von Holzoberflächen häufig mit verschiedenen Brauntönen gedruckt. Daraus ergibt sich, dass für den Digitaldruck einerseits und den Tiefdruck andererseits in der Regel mit sehr unterschiedlichen Farb-Separationen gearbeitet werden muss. So wird in der Praxis z.B. für ein bestimmtes Dekor zunächst eine Digitaldruckseparation in einem bestimmten Farbraum, z. B. im CMYK-Farbraum erstellt. Soll ein Dekor in die Massenproduktion überführt werden, wird eine neue Tiefdruckseparation für den entsprechenden Farbraum erstellt. Solche Tiefdruckseparationen sind in der Praxis sehr aufwendig und erfordern in erheblichem Maße manuelle Tätigkeiten. Im Zuge der Separation werden auf Basis eines digitalen Datensatzes, der z. B. im RGB-Format vorliegt, Farbauszüge für die jeweiligen Druckfarben erstellt. Dabei erfolgt die Separation für Oberflächendekore für den Analogdruck in der Regel derart, dass mit den auf Basis dieser Separation gravierten Druckzylindern anschließend mit unterschiedlichen Basisfarben Dekore in unterschiedlichen Farbtönen gedruckt werden können, d. h. unterschiedliche Farbstellungen werden in der Druckmaschine mit denselben Druckzylindern durch Wahl der jeweiligen Farben realisiert.

Problematisch bleibt die Vergleichbarkeit der zunächst für die Ausmusterung in kleinen Mengen erzeugten Dekore mithilfe des Digitaldrucks einerseits mit den später in der Massenproduktion hergestellten Dekoren im Tiefdruckverfahren andererseits. Hier will die Erfindung Abhilfe schaffen.

Ein Verfahren zur Erzeugung von einem Druckdekor zur Anwendung in unterschiedlichen Druckverfahren ist z. B. aus der EP 3 020 565 B1 bekannt. Dabei werden aus dem digitalen Datensatz durch eine Separation Farbauszüge für den Tiefdruck erzeugt, wobei pro Farbkanal eine spezifische Farbe oder Farbmischung vorgesehen ist. Aus den separierten Daten werden nach Reduzierung von deren Auflösung die für den Tiefdruck zu verwendenden Druckwalzen bzw. Druckzylinder gefertigt und die Mischfarben für jeden Zylinder definiert. Parallel oder im Anschluss an die Fertigung der Druckwalzen für den Tiefdruck werden die in den Farbkanälen separierten und gegebenenfalls bearbeiteten Farbinformationen zu einer digitalen Druckdatei zusammengefasst, d. h. die Separationsdaten werden zu einer digitalen Vorlage für den Digitaldruck zusammengefasst. Nach Umwandeln der digitalen Druckdatei in ein für den Digitaldrucker anwendbares Format mittels RIP wird unter Verwendung des Digitaldrucks ein zweites Druckdekor auf ein zweites Trägermaterial unter Bildung eines Musters erstellt. Damit soll gemäß EP 3 020 565 B1 die Erstellung eines identischen Druckdekors auf zwei Trägermaterialien mit zwei verschiedenen Druckverfahren, hier dem Tiefdruckverfahren als analogem, kostengünstigen Druckverfahren und dem Digitaldruck gelingen, wobei die von den beiden unterschiedlichen Druckverfahren erstellten Druckbilder nicht voneinander abweichen sollen.

In der EP 3 470 972 A1 wird ein Verfahren zur Mehrfachnutzung digitaler Druckdaten zur Erzeugung optisch und/oder haptisch hochwertiger Druckdekore auf einem Trägermaterial beschrieben, wobei zunächst aus dem Druckmotiv ein elektronischer Datensatz mit hoher Auflösung erzeugt und diese durch digitales separieren in vier Farbkanäle, und zwar im CMYK-Farbraum erstellt werden. Optional erfolgt ein unabhängiges Bearbeiten der jeweils in einem Farbkanal enthaltenen Farbinformationen. Die bereitgestellten, separierten Farbinformationen werden zu einer digitalen Druckdatei zusammengefasst, und zwar für ein im Digitaldruckverfahren zu erstellendes Druckdekor. Dieses Verfahren ist dadurch gekennzeichnet, dass Positionsdaten mindestens eines bereitgestellten, separierten Farbbestandteils beim Erzeugen des Druckdekors auf dem Trägermaterial ermittelt und gespeichert werden.

Im Übrigen beschreibt die WO 2010/108569 A1 ein Verfahren zur Herstellung von Plattenkörpern zur Verwendung im Boden-, Wand- oder Deckenbereich unter Verwendung bedruckter Druckpapiere, die mit einer Druckvorrichtung hergestellt werden, wobei die Druckvorrichtung wenigstens eine Digitaldruckeinrichtung zum Digitaldruck und wenigstens eine Tiefdruckeinrichtung zum Dekortiefdruck umfasst, wobei zum Druck des Dekors in Abhängigkeit der Menge des zu bedrückenden Druckpapiers entweder die Digitaldruckeinrichtung oder die Tiefdruckeinrichtung verwendet wird.

Im Übrigen kennt man aus der US 2016/0301829 A1 ein Verfahren zur Umwandlung von Basisfarben eines Basisfarbraums (z. B. CMYK) in einen Mehrfarbraum, z.B. CMYKcm-Farbraum.

Ausgehend von dem vorbekannten Stand der Technik liegt der Erfindung die Aufgabe zugrunde, ein Verfahren zur Erzeugung von Gravurdaten für die Gravur von Druckzylindern einer Analog-Druckmaschine zu schaffen, mit welchem sich eine zuvor im Digitaldruck erstellte Erstproduktion wirtschaftlich und mit hoher Qualität nachstellen lässt.

Zur Lösung dieser Aufgabe lehrt die Erfindung ein Verfahren gemäß Anspruch 1 zur Erzeugung von Gravurdaten für die Gravur von Druckzylindern einer Druckmaschine für den Mehrfarb-Analogdruck von Oberflächendekoren auf flächige Träger, z. B. Folien oder Papiere, mit den folgenden Verfahrensschritten:
a) es wird ein Layout eines Dekors als digitaler Datensatz (z. B. durch Scannen) erstellt oder zur Verfügung gestellt,
b) aus dem Datensatz werden durch eine Separation in einen Basisfarbraum mit mehreren Basisfarben, z. B. durch eine Standard-Digitaldruckseparation, Basis-Farbauszüge für jede einzelne Basisfarbe erzeugt,
c) die Basis-Farbauszüge werden optional mit einem Konvertierungsverfahren, z. B. mit einem Raster-Image-Prozessor (RIP), in konvertierte Farbauszüge mit konvertierter Farbverteilung umgewandelt, die optional als Digitaldruckdaten für eine Übergabe an eine Digitaldruckmaschine zur Verfügung stehen,
d) die konvertierten Farbauszüge oder alternativ auch die Basisfarbauszüge werden nachbearbeitet, indem für jede Basisfarbe bzw. jeden einzelnen Basis-Farbauszug die Tonwerte jeweils derart erhöht werden, dass der jeweils dunkelste Farbton, (d. h., der Farbton mit dem höchsten Tonwert) in dem Farbauszug auf einen vorgegebenen Maximal-Tonwert (von z. B. 95 % oder 100 %) angehoben wird und die übrigen Tonwerte des jeweiligen Farbauszuges entsprechend erhöht werden, z. B. linear erhöht werden,
wobei die derart nachbearbeiteten Farbauszüge als Gravurdaten für die Gravur der Druckzylinder einer Druckmaschine für ein Analogdruckverfahren, z. B. Druckzylinder einer Rotations-Tiefdruckmaschine, zur Verfügung stehen oder zur Verfügung gestellt werden. Der Druck im Analog-Druckverfahren mit den Druckzylindern erfolgt dann mit den reinen oder im Wesentlichen reinen Basisfarben des Basisfarbraums, jedoch in verschnittener und folglich verdünnter Form.

Außerdem schlägt die Erfindung zur Lösung der Aufgabe ein Verfahren nach Anspruch 2 zur Erzeugung von Druckdaten für den Druck von Oberflächendekoren vor, wobei einerseits Digitaldruckdaten für einen Digitaldruck und andererseits Gravurdaten für die Gravur von Druckzylindern für den Mehrfarb-Analogdruck erzeugt werden, mit den folgenden Verfahrensschritten:
a) es wird ein Layout eines Dekors als digitaler Datensatz erstellt oder zur Verfügung gestellt,
b) aus dem Datensatz werden durch eine Separation, z. B. eine Standard-Digitaldruckseparation, in einen Basisfarbraum mit mehreren Basisfarben Basis-Farbauszüge für jede einzelne Basisfarbe erzeugt,
c) die Basis-Farbauszüge werden optional mit einem Konvertierungsverfahren, z. B. mit einem Raster-Image-Prozessor (RIP), in konvertierte Farbauszüge mit konvertierter Farbverteilung umgewandelt,
   wobei die Basis-Farbauszüge oder die konvertierten Farbauszüge als Digitaldruckdaten für eine Übergabe an eine Digitaldruckmaschine zur Verfügung stehen oder zur Verfügung gestellt werden und
d) die für die Digitaldruckmaschine zur Verfügung gestellten Basis-Farbauszüge oder die konvertierten Farbauszüge werden nachbearbeitet, indem für jede Basisfarbe bzw. jeden einzelnen Farbauszug die Tonwerte jeweils derart erhöht werden, dass der jeweils dunkelste Farbton mit dem höchsten Tonwert in dem Farbauszug auf einen vorgegebenen Maximal-Tonwert angehoben wird und die übrigen Tonwerte des jeweiligen Farbauszuges nach einem vorgegebenen Zusammenhang erhöht werden,
wobei die derart nachbearbeiteten Farbauszüge als Gravurdaten für die Gravur der Druckzylinder einer Druckmaschine für ein Analog-Druckverfahren zur Verfügung stehen oder zur Verfügung gestellt werden.

Nach diesem Aspekt der Erfindung werden folglich sowohl Digitaldruckdaten als auch Analogdruckdaten bzw. Gravurdaten für den Analogdruck für die Erzeugung ein und desselben Dekors zur Verfügung gestellt, z. B. zunächst Digitaldruckdaten für eine Ausmusterung und anschließend Gravurdaten für den Analogdruck für eine Serienproduktion.

Grundsätzlich kann es sich um einen Zweifarbdruck mit zwei Druckzylindern handeln. Bevorzugt betrifft die Erfindung jedoch einen Dreifarbdruck und besonders bevorzugt einen Vierfarbdruck mit vier Druckzylindern, d. h. mit vier Basisfarben in einem vierdimensionalen Farbraum. Dabei kann es sich z. B. um einen CYMK-Farbraum handeln, d. h. bevorzugt wird mit den vier Basisfarben cyan, gelb, magenta und schwarz gearbeitet. Alternativ können auch zwei, drei, vier oder mehr (andere) Basisfarben z. B. blau, rot, gelb und schwarz verwendet werden.

Die Erfindung geht dabei von der Erkenntnis aus, dass es für die bestmögliche Nachstellung einer im Digitaldruck erstellten Erstproduktion im Analogdruck vorteilhaft ist, den Analogdruck mit denselben Farben bzw. Basisfarben im selben Farbraum zu realisieren, wobei im Analogdruck jedoch lediglich verschnittene und folglich verdünnte Farben dieses Farbraums zum Einsatz kommen.

Die Herstellung der Druckzylinder für den Analog- bzw. Tiefdruck erfolgt erfindungsgemäß nicht auf der Basis einer aufwendigen Tiefdruckseparation, die für spezielle Mischfarben, z. B. verschiedene Brauntöne, ausgelegt ist, sondern die Separation für die Gravur der Zylinder erfolgt in demselben Farbraum wie eine Standard-Digitaldruckseparation. Bevorzugt wird ein Verfahren zur Verfügung gestellt, mit dem sich ein und dasselbe Dekor mit hoher Vergleichbarkeit sowohl digital als auch analog produzieren lässt. Dieses gelingt z. B. wie folgt:
In der Produktion wird - wie üblich - zunächst ein bestimmtes Layout eines Dekors zur Verfügung gestellt und als digitaler Datensatz erstellt, z. B. durch Scannen digitalisiert. Ein solches Layout kann z. B. zunächst im RGB-Farbraum zur Verfügung stehen, der nicht für die Übergabe an einem Drucker geeignet ist.

Aus diesem Datensatz werden durch eine Separation in einen Basisfarbraum (z. B. den CMYK-Farbraum) mit mehreren Basisfarben, z. B. durch eine Standard-Digitaldruckseparation Basis-Farbauszüge für jede einzelne Basisfarbe, z. B. cyan, magenta, gelb und schwarz, erzeugt. Es handelt sich folglich um einen für die digitale Produktion bzw. für den Digitaldruck üblichen Separationsprozess.

Diese Basis-Farbauszüge werden in einer bevorzugten Ausführungsform des Verfahrens, anschließend mit einem Konvertierungsverfahren, insbesondere durch eine GCR-Konvertierung (gray component replacement) in konvertierte Farbauszüge z. B. in einem Unbuntaufbau umgewandelt. Es erfolgt folglich eine GCR-Konvertierung im Rasterimageprozessor (RIP), sodass konvertierte Farbauszüge im Unbuntaufbau zur Verfügung stehen. Diese können in grundsätzlich bekannter Weise an eine Digitaldruckmaschine übergeben werden, die z. B. mit den Skalenfarben CMYK oder auch mit den Basisfarben blau, rot, gelb, schwarz druckt. Bis zu diesem Schritt handelt es sich um eine herkömmliche Verarbeitung der Druckdaten für das Drucken von Dekoren im Digitaldruck, bei welchem die Druckdaten durch eine GCR-Konvertierung im Unbuntaufbau verwendet werden. Eine solche GCR konvertierte Digitaldruckseparation, die ohne weitere Veränderungen an den Digitaldrucker übergeben werden kann, hat den Vorteil, dass besonders wirtschaftlich digital gedruckt werden kann, da in der Regel ein höherer Schwarzanteil erzeugt ist.

Erfindungsgemäß wird nun an dieser Stelle angesetzt, um Gravurdaten für den Analogdruck zu erzeugen, die eine hervorragende Nachstellung des Digitaldruckmusters im Analogdruck ermöglichen.

Dazu wird auf genau die Daten zugegriffen, die an die Digitaldruckmaschine übergeben wurden, z. B. die durch die GCR-Konvertierung im RIP erzeugten, konvertierten Farbauszüge zugegriffen. Die Farbauszüge, die im Digitaldruck nicht mehr nachträglich manipuliert, sondern unverändert der Digitaldruckmaschine übergeben werden, werden erfindungsgemäß für die Vorbereitung des Analogdrucks weiter verarbeitet.

Sofern für den Digitaldruck eine Konvertierung (z. B. GCR-Konvertierung) nicht erforderlich ist und folglich die Basis-Farbauszüge an die Digitaldruckmaschine für den Digitaldruck weitergegeben werden, werden die Basis-Farbauszüge verwendet und in der beschriebenen Weise für den Analogdruck nachbearbeitet. Stets erfolgt die Nachbearbeitung für den Analogdruck auf Basis der Farbauszüge, die zuvor an die Digitaldruckmaschine übergeben wurden.

So besteht die Möglichkeit, z. B. zunächst eine Vielzahl von Dekoren für den Digitaldruck zu separieren und im Digitaldruck kostengünstig in kleinen

Stückzahlen zu produzieren. Soll später ein bestimmtes Dekor im Analogdruck nachgestellt werden, so werden die konvertierten Daten, die für den Digitaldruck zur Verfügung stehen, wie folgt weiterverarbeitet:
Die konvertierten Farbauszüge (oder Basisfarbauszüge) werden für den Analogdruck nachbearbeitet, indem für jede Basisfarbe bzw. jeden Basisfarbauszug die Tonwerte erhöht werden, und zwar derart, dass jeweils der dunkelste Farbton in dem Farbauszug auf einen Maximalwert von zumindest 90 %, vorzugsweise zumindest 95 %, z. B. 100 % angezogen wird. Alle Tonwerte dazwischen werden vorzugsweise linear erhöht. Durch diese Vorgehensweise wird die Tonwertinformation pro Farbauszug und folglich pro Zylinder erhöht. Damit besteht die Möglichkeit, anschließend im Analogdruck mit stark verschnittenen, reinen Basisfarben, z. B. verschnittenen CMYK-Farben zu arbeiten und auf diese Weise den Digitaldruck hervorragend nachzustellen. Die in der beschriebenen Weise nachbearbeiteten Farbauszüge werden folglich als Gravurdaten für die Gravur der Druckzylinder einer Analogdruckmaschine zur Verfügung gestellt und in der Produktion wird mit diesen Druckzylindern im Analogdruck mit reinen, jedoch verschnittenen Basisfarben des Basisfarbraums (z. B. CMYK) gearbeitet. Auf diese Weise ist die Vergleichbarkeit zwischen den Ergebnissen im Analogdruck und im Digitaldruck sehr gut. Durch die Verwendung des Unbuntaufbaus im Digitaldruck und im Analogdruck wird der gesamte Farbverbrauch verringert und die Farbstabilität in beiden Prozessen erhöht. Da im Analogdruck mit (reinen) verschnittenen Farben gedruckt wird und die überwiegende Zeichnung des Dekors aus dem Schwarzauszug (aufgrund der GCR-Konvertierung) kommt, wird eine leichte Verschiebung des Registers nicht unmittelbar sichtbar.

Im Rahmen der Erfindung kommt der Nachbearbeitung der Farbauszüge gemäß Merkmal d) besondere Bedeutung zu, bei welcher die Tonwerte und folglich die Helligkeitsstufen verändert werden. Bei einer solchen Nachbearbeitung kann auf bekannte Werkzeuge und Programme der Bildverarbeitung bzw. aus der Druckvorstufe zurückgegriffen werden, mit denen sich die Tonwerte jedes einzelnen Farbauszuges manipulieren lassen.

Wie beschrieben wird erfindungsgemäß im Analogdruck auf dieselben Farben zurückgegriffen, die zuvor bei der Ausmusterung auch für den Digitaldruck verwendet wurden. Die für den Digitaldruck verwendeten Farben werden als Basisfarben bezeichnet und im Analogdruck kommen anschließend bevorzugt dieselben, reinen Basisfarben, jedoch in verschnittener und folglich verdünnter Form zum Einsatz. Es besteht jedoch auch die Möglichkeit, nicht mit 100 % reinen Basisfarben zu arbeiten, sondern mit im Wesentlichen reinen Basisfarben, die zu einem geringen Anteil von maximal 10 %, vorzugsweise maximal 5 %, besonders bevorzugt maximal 3 % andere Farbanteile aufweisen.

Mit dem erfindungsgemäßen Verfahren lassen sich einerseits Druckdaten bzw. Farbauszüge für den Digitaldruck und andererseits Druckdaten bzw. Farbauszüge für die Gravur der Druckzylinder für den Analogdruck erzeugen, die zu Ergebnissen mit hoher Vergleichbarkeit führen. Damit lassen sich zunächst eine Vielzahl von Dekoren im Digitaldruck testen. Soll zu einem späteren Zeitpunkt ein bestimmtes Dekor im Analogdruck nachgestellt werden, lässt sich dieses in der beschriebenen Weise mit hervorragender Qualität realisieren.

Die Erfindung betrifft dabei zum einen die Erzeugung der Gravurdaten für die Gravur der Druckzylinder (z. B. einer Rotations-Druckmaschine) und zum anderen ein Verfahren zum Herstellen der Druckzylinder einer Druckmaschine für den Mehrfarb-Analogdruck von Oberflächendekoren. Für die Gravur der Druckzylinder (z. B. einer Rotation-Tiefdruckmaschine) werden folglich die in der beschriebenen Weise erzeugten Gravurdaten verwendet.

Schließlich betrifft die Erfindung auch das Druckverfahren selbst, d. h. ein Verfahren zum Drucken von Dekoren im Analogdruckverfahren mit Druckzylindern, die in der beschriebenen Weise hergestellt sind. Darüber hinaus betrifft die Erfindung auch ein Verfahren zum Drucken ein und desselben Dekors sowohl im Digitaldruck als auch im Analogdruck, wobei die jeweiligen Druckdaten in der beschriebenen Weise hergestellt sind. Von besonderer Bedeutung ist, dass ein und dasselbe Dekor einerseits im Digitaldruck in einem bestimmten Farbraum und dann z. B. später ausgewählte Dekore auch im Analogdruck im selben (oder im Wesentlichen selben) Farbraum, jedoch mit verschnittenen Farben gedruckt werden.

Im Folgenden wird die Erfindung anhand von Zeichnungen näher erläutert, die lediglich ein Ausführungsbeispiel darstellen. Es zeigen
- Fig. 1: ein Layout eines Oberflächendekors, z. B. als Holznachbildung,
- Fig. 2A, B: die Erzeugung von Druckdaten oder Gravurdaten eines aus dem Stand der Technik bekannten Verfahrens,
- Fig. 3A, B: die erfindungsgemäße Verarbeitung bzw. Erzeugung von Druckdaten für einen Digitaldruck und
- Fig. 4: die Weiterverarbeitung der Daten nach Figur 3A, B für den Analogdruck.

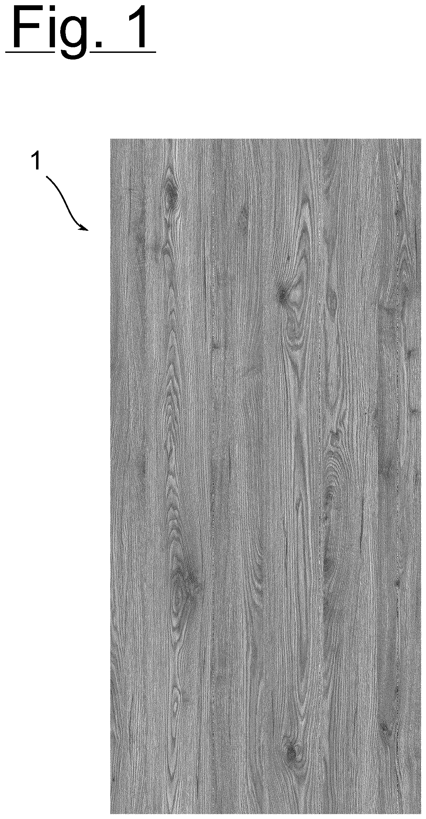

Ausgangspunkt ist ein in Fig. 1 beispielhaft dargestelltes Dekor als Layout, wobei es sich z. B. um die Nachbildung einer Holzoberfläche handeln kann. Es handelt sich um ein farbiges Layout, dass in Fig. 1 lediglich in Grautönen dargestellt ist. Für dieses Dekor wird ein Layout 1 als digitaler Datensatz erstellt, indem z. B. die Vorlage digitalisiert (z. B. gescannt) wird. Ein solcher digitaler Datensatz lässt sich nicht unmittelbar für den Druck verwenden, und zwar weder für den Digitaldruck noch für den Analogdruck, sodass in der sogenannten Druckvorstufe eine Farbseparation erfolgt, d. h. es werden Farbauszüge für den für den Druckprozess gewählten Farbraum erzeugt.

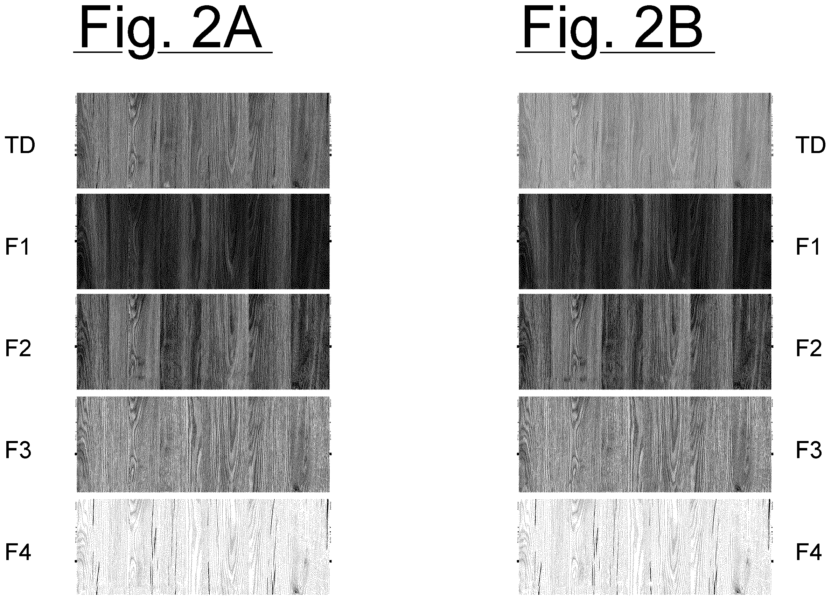

Die Fig. 2A und B zeigen dabei den klassischen Weg in der Dekorentwicklung bis zum Druck. Es erfolgt zunächst gemäß Fig. 2A eine Farbseparation, und zwar eine Tiefdruckseparation in einem speziellen Farbraum, der für die vier Druckzylinder nicht die Skalenfarben CYMK, sondern spezielle Mischfarben, z. B. mehrere Brauntöne, vorsieht. Dabei sind in Fig. 2A in den unteren vier Darstellungen die Tonwertinformationen bzw. Farbauszüge F1, F2, F3 und F4 für die vier gewählten Farben dargestellt und das obere Bild zeigt das Druckbild TD, d. h. das Ergebnis des Drucks dieser Tiefdruckseparation mit reinen Skalenfarben CMYK, das sogenannte Farbspiel. Dieses farbige Druckbild TD ist in Fig. 2A oben lediglich in Grautönen dargestellt. Das Druckbild ist unnatürlich, da der Druck in diesem Fall z. B. in CMYK erfolgt, obwohl die Tiefdruckseparation für den Druck mit Mischfarben (z. B. Brauntönen) ausgelegt ist. Ein solches Farbspiel ist jedoch bei der klassischen Technik vorteilhaft, damit mit einem einzigen Zylindersatz mit verschiedenen Mischfarben bzw. durch Austausch der Mischfarben verschiedene Farbnuancen des Dekors erzeugt werden können. Die Zeichnungen zeigen dabei für die Farbauszüge F1 bis F4 jeweils den Schwarzausdruck, d. h. die Tonwertinformation im jeweiligen Zylinder. Im jeweils oberen Bild der Fig. 2A ist das Druckergebnis angedeutet, das in der Praxis - entgegen der Darstellung - farbig ist.

Fig. 2B zeigt dieselbe Tiefdruckseparation mit denselben Tonwertinformationen in den (Farbauszügen F1 bis F4) bzw. Zylindern. Im oberen Bereich ist nun jedoch das Druckergebnis TD dieser Tiefdruckseparation mit den speziell vorgesehenen Mischfarben (z. B. vier Brauntönen) dargestellt, sodass das Druckergebnis TD in Fig. 2B im Wesentlichen dem in Fig. 1 dargestellten Layout 1 entspricht. Wichtig ist, dass in diesem Fall im Analogdruck mit speziellen Mischfarben gearbeitet wird, z. B. verschiedenen Brauntönen. Auch Fig. 2B zeigt oben das farbige Druckergebnis lediglich in Graustufen.

Eine solche herkömmliche Tiefdruckseparation gem. Fig. 2A, B ist mit großem Aufwand verbunden. Sofern zunächst ein Dekor im Digitaldruck z. B. im CMYK-Farbraum in kleinen Mengen gedruckt wird und anschließend dasselbe Dekor für den Analogdruck vorbereitet werden soll, ist zum einen die aufwändige Tiefdruckseparation erforderlich und zum anderen ist die Nachstellbarkeit problematisch.

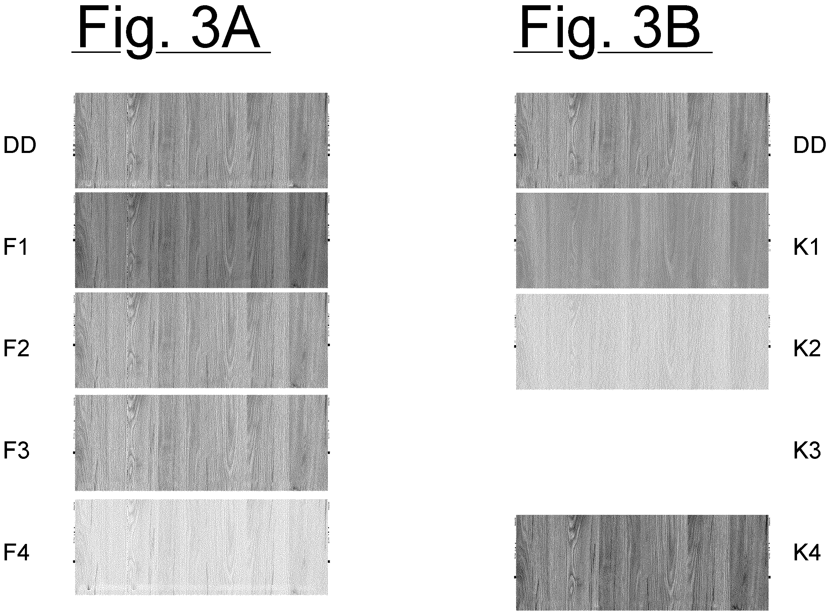

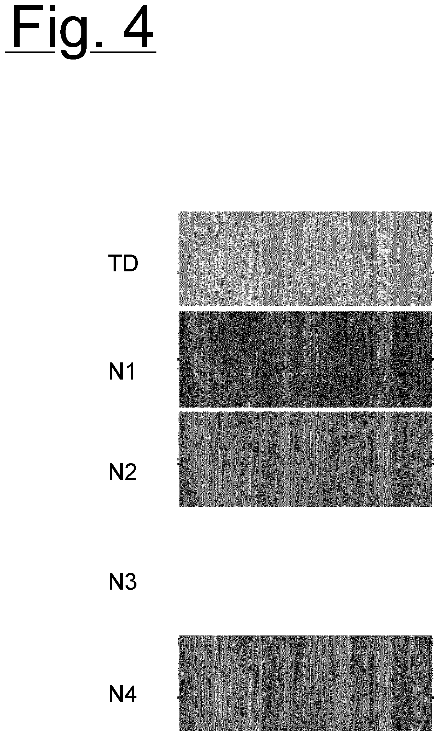

Aus diesem Grund wird erfindungsgemäß in der in den Figuren 3A und 3B sowie 4 beschriebenen Weise gearbeitet:
Gemäß Fig. 3A erfolgt zunächst eine Standard-Digitaldruck Separation in einem Basisfarbraum, der üblicherweise für den Digitaldruck eingesetzt wird, z. B. in einem CMYK-Farbraum. Es sind wiederum die einzelnen Tonwertinformationen F1 bis F4 bzw. die einzelnen Farbauszüge F1 bis F4 als Basisfarbauszüge sowie im oberen Bild das Ergebnis DD des Digitaldrucks im CMYK-Farbraum dargestellt. Das farbige Ergebnis DD ist wiederum lediglich in Graustufen dargestellt.

Diese Basisfarbauszüge F1 bis F4 gemäß Fig. 3A werden jedoch in der Regel nicht für den Digitaldruck verwendet, sondern es erfolgt zunächst eine Bearbeitung, insbesondere eine GCR-Konvertierung im Raster-Image-Prozessor, sodass die konvertierten Farbauszüge K1 bis K4 gemäß Fig. 3B erzeugt werden. Es handelt sich um eine GCR-konvertierte Digitaldruckseparation im selben Basisfarbraum, z. B. CMYK-Farbraum. Anhand der einzelnen Farbauszüge K1 bis K4 lässt sich der Unbuntaufbau mit erhöhtem Schwarzanteil erkennen, d. h. die Farbauszüge F1 bis F4 gemäß Figur 3A werden in konvertierte Farbauszüge K1 bis K4 in einem Unbuntaufbau gemäß Fig. 3B umgewandelt. Diese Daten gemäß Fig. 3B lassen sich nun für die digitale Produktion unmittelbar an eine digitale Druckmaschine übergeben, sodass im Digitaldruck das in Fig. 3B oben dargestellte Druckbild DD entsteht, und zwar durch Druck mit den vier Basisfarben, z. B. Skalenfarben im CMYK-Farbraum. Die Darstellung des farbigen Druckbildes DD in Fig. 3B ist ebenfalls auf einen schwarz/weiß-Darstellung bzw. auf Grautöne beschränkt. Die Farbauszüge K1 bis K4 sind in der üblichen Weise als Schwarzausdruck dargestellt.

Soll nun z. B. das in Fig. 1 bzw. Fig. 3B oben dargestellte Dekor bzw. Druckbild DD zu einem späteren Zeitpunkt im Analogdruck nachgestellt werden bzw. für den Analogdruck vorbereitet werden, so werden die in Fig. 3B dargestellten Daten, d. h. die konvertierten Farbauszüge K1 bis K4 übernommen und in spezieller Weise nachbearbeitet. Für jede Basisfarbe bzw. für jeden Basis-Farbauszug K1 bis K4 werden die Tonwerte jeweils derart erhöht, dass der jeweils dunkelste Farbton in dem Farbauszug auf einen Maximalwert von 100 % angehoben und die übrigen Tonwerte des jeweiligen Farbauszuges linear erhöht werden. Wird z. B. innerhalb eines einzelnen Farbauszuges der dunkelste Farbton, d. h. der Farbton mit dem höchsten Tonwert von ursprünglich 50 % auf 100 % und folglich um den Faktor 2 angehoben, so werden alle anderen Tonwerte desselben Farbauszuges ebenfalls um diesen Faktor 2 angehoben. Durch diese Nachbearbeitung werden die in Fig. 4 dargestellten, nachbearbeiteten Farbauszüge N1 bis N4 erzeugt. Diese Daten werden für die Gravur der vier Zylinder verwendet und mit diesen Zylindern erfolgt in der Analogdruckmaschine der Druck mit verschnittenen, reinen Basisfarben. Auf diese Weise lässt sich das ursprünglich hergestellte Digitaldruckmuster DD aus Fig. 3B hervorragend im Analogdruck TD nachstellen, und zwar im identischen Farbraum, jedoch mit verschnittenen Farben (z. B. verschnittenen CMYK-Farben). Fig. 4 zeigt folglich oben das Ergebnis des Tiefdrucks TD mit den Zylindern, die auf Basis der Farbauszüge N1 bis N4 mit maximaler Tonwertkorrektur graviert sind. Dabei ist auch in Fig. 4 erkennbar, dass die Tonwertinformationen pro Zylinder erhöht werden und dieses verschafft die Möglichkeit, im Analogdruck mit deutlich stärker verschnittenen, reinen CMYK-Farben zu arbeiten und so den Digitaldruck gut nachzustellen. Durch die maximale Tonwertkorrektur wird in diesem Ausführungsbeispiel erreicht, dass eine der Farben, z. B. cyan, kaum bzw. nicht benötigt wird.

Dadurch, dass der Digitaldruck gemäß Fig. 3B in den reinen Farben, z. B. CMYK, druckt und die Nachstellung im Analogdruck gemäß Fig. 4 ebenfalls in CMYK-Farbraum erfolgt, ist die Vergleichbarkeit sehr gut. Durch die Verwendung des Unbuntaufbaus im Digitaldruck und im Analogdruck wird der Gesamtfarbverbrauch verringert und außerdem die Farbstabilität in beiden Prozessen erhöht. Auch zu Fig. 4 wird darauf hingewiesen, dass das farbige Druckergebnis TD zeichnerisch lediglich in schwarz-weiß bzw. Grautönen dargestellt ist. Die Farbauszüge N1 bis N4 zeigen jeweils den Schwarzausdruck, d. h. die Tonwertinformation im jeweiligen Zylinder.

In bestimmten Fällen besteht beim Digitaldruck die Möglichkeit, bereits die in Fig. 3A dargestellten Basis-Farbauszüge F1 bis F4 für den Digitaldruck zu verwenden und folglich an die Digitaldruckmaschine zu übergeben, sodass gegebenenfalls auf die GCR-Konvertierung verzichtet werden kann. In diesem Fall werden dann für die erfindungswesentliche Bearbeitung zur Vorbereitung des Analogdrucks auch diese Basis-Farbauszüge F1 bis F4 verwendet, d. h. für die im Zusammenhang mit Fig. 4 beschriebene Bearbeitung der Tonwerte werden stets die Daten verwendet, die zuvor für die Ausmusterung im Digitaldruck verwendet wurden.

Im Übrigen können alternativ zu den beschriebenen Skalenfarben in CMYK auch andere Basisfarben und insbesondere ähnliche Basisfarben verwendet werden, z. B. blau, rot, gelb und/oder schwarz.

Für den Analogdruck wird - wie beschrieben - bevorzugt auf dieselben, reinen Skalenfarben zurückgegriffen, die auch für den Digitaldruck verwendet werden. Optional kann es sich um im Wesentlichen reine, verschnittene Skalenfarben handeln, die zu einem sehr geringen Anteil andere Farben enthalten.

## Patentansprüche

1. Verfahren zur Erzeugung von Gravurdaten für die Gravur von Druckzylindern einer Druckmaschine für den Mehrfarb-Analogdruck von Oberflächendekoren auf flächige Träger, z. B. Folien oder Papiere, mit den folgenden Verfahrensschritten:
a) es wird ein Layout (1) eines Dekors als digitaler Datensatz erstellt oder zur Verfügung gestellt,
b) aus dem Datensatz werden durch eine Separation, z. B. eine Standard-Digitaldruckseparation, in einen Basisfarbraum mit mehreren Basisfarben Basis-Farbauszüge (F1 bis F4) für jede einzelne Basisfarbe erzeugt,
c) die Basis-Farbauszüge (F1 bis F4) werden optional mit einem Konvertierungsverfahren, z. B. mit einem Raster-Image-Prozessor (RIP), in konvertierte Farbauszüge (K1 bis K4) mit konvertierter Farbverteilung umgewandelt, die optional als Digitaldruckdaten für eine Übergabe an eine Digitaldruckmaschine zur Verfügung stehen,
d) die Basis-Farbauszüge (F1 bis F4) oder die konvertierten Farbauszüge (K1 bis K4) werden nachbearbeitet, indem für jede Basisfarbe bzw. jeden einzelnen Farbauszug die Tonwerte jeweils derart erhöht werden, dass der jeweils dunkelste Farbton mit dem höchsten Tonwert in dem Farbauszug auf einen vorgegebenen Maximal-Tonwert angehoben wird und die übrigen Tonwerte des jeweiligen Farbauszuges nach einem vorgegebenen Zusammenhang erhöht werden,
wobei die derart nachbearbeiteten Farbauszüge (N1 bis N4) als Gravurdaten für die Gravur der Druckzylinder einer Druckmaschine für ein Analog-Druckverfahren zur Verfügung stehen oder zur Verfügung gestellt werden, wobei die Druckzylinder für einen Analogdruck mit reinen oder im Wesentlichen reinen, jedoch verschnittenen Basisfarben des Basisfarbraums bestimmt sind.

2. Verfahren zur Erzeugung von Druckdaten für den Druck von Oberflächendekoren auf flächige Träger, z. B. Folien oder Papiere, wobei einerseits Digitaldruckdaten für einen Digitaldruck erzeugt wurden und anderseits Gravurdaten für die Gravur von Druckzylindern für den Mehrfarb-Analogdruck mit einem Verfahren nach Anspruch 1 erzeugt werden, mit den folgenden Verfahrensschritten:
a) es wird ein Layout (1) eines Dekors als digitaler Datensatz erstellt oder zur Verfügung gestellt,
b) aus dem Datensatz werden durch eine Separation, z. B. eine Standard-Digitaldruckseparation, in einen Basisfarbraum mit mehreren Basisfarben Basis-Farbauszüge (F1 bis F4) für jede einzelne Basisfarbe erzeugt,
c) die Basis-Farbauszüge (F1 bis F4) werden optional mit einem Konvertierungsverfahren, z. B. mit einem Raster-Image-Prozessor (RIP), in konvertierte Farbauszüge (K1 bis K4) mit konvertierter Farbverteilung umgewandelt,
wobei die Basis-Farbauszüge (F1 bis F4) oder die konvertierten Farbauszüge (K1 bis K4) als Digitaldruckdaten für eine Übergabe an eine Digitaldruckmaschine zur Verfügung stehen oder zur Verfügung gestellt werden und
d) die für die Digitaldruckmaschine zur Verfügung gestellten Basis-Farbauszüge (F1 bis F4) oder die konvertierten Farbauszüge (K1 bis K4) werden nachbearbeitet, indem für jede Basisfarbe bzw. jeden einzelnen Farbauszug die Tonwerte jeweils derart erhöht werden, dass der jeweils dunkelste Farbton mit dem höchsten Tonwert in dem Farbauszug auf einen vorgegebenen Maximal-Tonwert angehoben wird und die übrigen Tonwerte des jeweiligen Farbauszuges nach einem vorgegebenen Zusammenhang erhöht werden,
wobei die derart nachbearbeiteten Farbauszüge (N1 bis N4) als Gravurdaten für die Gravur der Druckzylinder einer Druckmaschine für ein Analog-Druckverfahren zur Verfügung stehen oder zur Verfügung gestellt werden.

3. Verfahren nach Anspruch 1 oder 2 für einen Dreifarb- oder Vierfarbdruck, wobei durch die Separation in Verfahrensschritt b) drei oder vier Basis-Farbauszüge für die drei- oder vier Basisfarben erzeugt werden.

4. Verfahren nach Anspruch 3, wobei als Basisfarben
- blau oder blau/grün, z. B. cyan (C)
- rot oder rot/blau, z. B. magenta (M)
- gelb (Y) und/oder
- schwarz (K)
verwendet werden, z. B. in einem CMYK-Farbraum oder Blau-Rot-Gelb-Schwarz-Farbraum

5. Verfahren nach einem der Ansprüche 1 bis 4, wobei in Verfahrensschritt c) die Basis-Farbauszüge (F1 bis F4) mit dem Bearbeitungsverfahren durch eine GCR-Konvertierung in konvertierte Farbauszüge (K1 bis K4) in einem Unbuntaufbau umgewandelt werden.

6. Verfahren nach einem der Ansprüche 1 bis 5, wobei in Verfahrensschritt d) der jeweils dunkelste Farbton in dem Farbauszug auf einen vorgegebenen Maximal-Tonwert von zumindest 90 %, z. B. zumindest 95 %, vorzugsweise 100 % angehoben wird und die übrigen Tonwerte des jeweiligen Farbauszuges entsprechend erhöht werden.

7. Verfahren nach einem der Ansprüche 1 bis 6, wobei in Verfahrensschritt d) die übrigen Tonwerte des jeweiligen Farbauszuges linear erhöht werden.

8. Verfahren zum Herstellen von Druckzylindern einer Druckmaschine für den Mehrfarb-Analogdruck von Oberflächendekoren auf flächige Träger, z. B. Folien oder Papiere,
wobei für die Gravur der Druckzylinder Gravurdaten verwendet werden, die mit einem Verfahren nach einem der Ansprüche 1 bis 7 erzeugt werden oder erzeugt sind.

9. Verfahren zum Drucken von Dekoren im Analogdruck mit Druckzylindern, insbesondere in einem Tiefdruckverfahren, wobei die Druckzylinder mit einem Verfahren nach Anspruch 8 hergestellt sind.

10. Verfahren zum Drucken von Dekoren sowohl im Digitaldruck als auch im Analogdruck, wobei die Druckdaten für den Digitaldruck einerseits und für die Gravur der Druckzylinder für den Mehrfarb-Analogdruck andererseits mit einem Verfahren nach einem der Ansprüche 2 bis 7 erzeugt werden.

11. Verfahren nach Anspruch 9 oder 10, wobei mit den Druckzylindern mit reinen oder im Wesentlichen reinen, verschnittenen Basisfarben des Basisfarbraums gedruckt wird.

## Claims

1. A method for generating engraving data for the engraving of printing cylinders of a printing machine for the multi-color analog printing of surface decors on flat substrates, e.g. films or papers, comprising the following method steps:
a) a layout (1) of a decor is created or made available as a digital data set,
b) base color separations (F1 to F4) for each individual base color are generated from the data set by means of a separation, e.g., a standard digital print separation, into a base color space with multiple base colors,
c) the base color separations (F1 to F4) are optionally converted into converted color separations (K1 to K4) with converted color distribution using a conversion method, e.g., using a raster image processor (RIP), which are optionally available as digital print data for transfer to a digital printing machine,
d) the base color separations (F1 to F4) or the converted color separations (K1 to K4) are post-processed by increasing the tonal values for each base color or each individual color separation in such a manner that in each case the darkest tone with the highest tonal value in the color separation is raised to a predetermined maximum tonal value, and the remaining tonal values of the respective color separation are increased according to a predetermined relationship,
wherein the color separations (N1 to N4) post-processed in this manner are available or made available as engraving data for engraving the printing cylinders of a printing machine for an analog printing method,
wherein the printing cylinders are intended for analog printing with pure or substantially pure but blended base colors of the base color space.

2. A method for generating print data for the printing of surface decors on flat substrates, e.g. films or papers, wherein, on the one hand, digital print data for a digital print are generated and, on the other hand, engraving data for the engraving of print cylinders for multi-color analog printing are generated by a method according to claim 1, comprising the following method steps:
a) a layout (1) of a decor is created or made available as a digital data set,
b) base color separations (F1 to F4) for each individual base color are generated from the data set by means of a separation, e.g., a standard digital print separation, into a base color space with multiple base colors,
c) the base color separations (F1 to F4) are optionally converted into converted color separations (K1 to K4) with converted color distribution using a conversion method, e.g., using a raster image processor (RIP),
wherein the base color separations (F1 to F4) or the converted color separations (K1 to K4) are available or made available as digital printing data for transfer to a digital printing machine, and
d) the base color separations (F1 to F4) made available for the digital printing machine or the converted color separations (K1 to K4) are post-processed by increasing the tonal values for each base color or each individual color separation in such a manner that in each case the darkest tone with the highest tonal value in the color separation is raised to a predetermined maximum tonal value, and the remaining tonal values of the respective color separation are increased according to a predetermined relationship,
wherein the color separations (N1 to N4) post-processed in this manner are available or made available as engraving data for engraving the printing cylinders of a printing machine for an analog printing method.

3. The method according to claim 1 or 2 for a three-color or four-color print, wherein three or four base color separations for the three or four base colors are produced by the separation in method step b).

4. The method according to claim 3, wherein as the base colors
- blue or blue/green, e.g., cyan (C)
- red or red/blue, e.g., magenta (M)
- yellow (Y) and/or
- black (K)
are used, e.g., in a CMYK color space or blue-red-yellow-black color space.

5. The method according to any one of claims 1 to 4, wherein in method step c), the base color separations (F1 to F4) are converted by means of a GCR conversion into converted color separations (K1 to K4) in an achromatic structure using the processing method.

6. The method according to any one of claims 1 to 5, wherein in method step d), in each case the darkest tonal value in the color separations is raised to a predetermined maximum tonal value of at least 90 %, e.g., at least 95 %, preferably 100 %, and the remaining tonal values of the respective color separation are increased accordingly.

7. The method according to any one of claims 1 to 6, wherein in method step d), the remaining tonal values of the respective color separation are increased linearly.

8. A method for producing printing cylinders of a printing machine for multi-color analog printing of surface decors on flat substrates, e.g., films or papers,
wherein engraving data are used for engraving the printing cylinders, which engraving data are generated or have been generated by a method according to any one of claims 1 to 7.

9. A method for printing decors in analog printing with printing cylinders, in particular using an intaglio printing method, wherein the printing cylinders are produced by a method according to claim 8.

10. A method for printing decors both in digital printing and in analog printing, wherein the printing data for digital printing on the one hand and for engraving the printing cylinders for multi-color analog printing on the other hand are generated by a method according to any one of claims 2 to 7.

11. The method according to claim 9 or 10, wherein the printing cylinders are used to print with pure or substantially pure, blended base colors of the base color space.

## Revendications

1. Procédé pour générer des données de gravure pour graver des cylindres d'impression d'une machine d'impression pour l'impression analogique multicolore de décors de surface sur des substrats plats, par exemple des films ou des papiers, avec les étapes suivantes :
a) une mise en page (1) d'un décor est créée ou mise à disposition sous forme d'ensemble de données numériques ;
b) à partir de l'ensemble de données, par une séparation, par exemple une séparation d'impression numérique standard, des épreuves couleurs de base (F1 à F4) sont générées en un espace colorimétrique de base comportant plusieurs couleurs de base pour chaque couleur de base individuelle ;
c) les épreuves couleurs de base (F1 à F4) sont éventuellement converties au moyen d'un procédé de conversion, par exemple un processeur d'images tramées (RIP), en épreuves couleurs converties (K1 à K4) avec répartition des couleurs convertie qui est éventuellement, lesquelles épreuves couleurs converties sont éventuellement disponibles sous forme de données d'impression numériques pour le transfert vers une machine d'impression numérique ;
d) les épreuves couleurs de base (F1 à F4) ou les épreuves couleurs converties (K1 à K4) sont retravaillées par le fait que, pour chaque couleur de base ou chaque épreuve couleur individuelle, les valeurs tonales sont respectivement augmentées de manière à ce que la teinte la plus foncée ayant la valeur tonale la plus élevée dans l'épreuve couleur soit portée à une valeur tonale maximale prédéterminée et que les valeurs tonales restantes de l'épreuve couleur respective soient augmentées selon un contexte prédéterminé,
les épreuves couleurs (N1 à N4) ainsi retravaillées étant disponibles ou mises à disposition en tant que données de gravure pour graver les cylindres d'impression d'une machine à imprimer pour un procédé d'impression analogique,
les cylindres d'impression étant conçus pour l'impression analogique avec des couleurs de base pures ou essentiellement pures mais coupées de l'espace colorimétrique de base.

2. Procédé de génération de données d'impression pour imprimer de décors de surface sur des substrats plats, par exemple des films ou des papiers, dans lequel d'une part des données d'impression numériques pour une impression numérique ont été générées et d'autre part des données de gravure pour la gravure de cylindres d'impression pour l'impression analogique multicolore sont générées par un procédé selon la revendication 1, avec les étapes de procédé suivantes :
a) une mise en page (1) d'un décor est créée ou mise à disposition sous forme d'ensemble de données numériques ;
b) à partir de l'ensemble de données, par une séparation, par exemple une séparation d'impression numérique standard, des épreuves couleurs de base (F1 à F4) sont générées en un espace colorimétrique de base comportant plusieurs couleurs de base pour chaque couleur de base individuelle ;
c) les épreuves couleurs de base (F1 à F4) sont éventuellement converties en épreuves couleurs converties (K1 à K4) avec répartition des couleurs converties au moyen d'un procédé de conversion, par exemple un processeur d'images tramées (RIP),
les épreuves couleurs de base (F1 à F4) ou les épreuves couleurs converties (K1 à K4) sont disponibles ou mises à disposition sous forme de données d'impression numérique pour le transfert vers une machine d'impression numérique et
d) les épreuves couleurs de base (F1 à F4) ou les épreuves couleurs converties (K1 à K4) mises à disposition pour la machine d'impression numérique sont respectivement retravaillées en augmentant les valeurs tonales de chaque couleur de base ou de chaque épreuve couleur individuelle de manière à ce que la teinte la plus foncée ayant la valeur tonale la plus élevée dans l'épreuve couleur soit portée à une valeur tonale maximale prédéterminée et que les valeurs tonales restantes de l'épreuve couleur respective soient augmentées en fonction d'un contexte prédéterminé,
les épreuves couleurs (N1 à N4) ainsi retravaillées sont disponibles ou fournies en tant que données de gravure pour la gravure des cylindres d'impression d'une machine d'impression pour un processus d'impression analogique.

3. Procédé selon la revendication 1 ou 2 pour une impression en trois ou quatre couleurs, dans lequel trois ou quatre épreuves couleurs de base pour les trois ou quatre épreuves couleurs de base sont générées par la séparation dans l'étape b) du procédé.

4. Procédé selon la revendication 3, dans lequel on utilise les couleurs de base suivantes
- bleu ou bleu/vert, par exemple cyan (C)
- rouge ou rouge/bleu, par exemple magenta (M)
- jaune (Y) et/ou
- noir (K),
par exemple dans un espace colorimétrique CMYK ou un espace colorimétrique bleu-rouge-jaune-noir.

5. Procédé selon l'une quelconque des revendications 1 à 4, dans lequel, dans l'étape de traitement c), les épreuves couleurs de base (F1 à F4) sont converties au moyen du procédé de traitement par une conversion GCR en épreuves couleurs converties (K1 à K4) dans une structure non colorée.

6. Procédé selon l'une quelconque des revendications 1 à 5, dans lequel, dans l'étape de procédé d), la teinte respectivement la plus foncée dans l'épreuve couleur est portée à une valeur tonale maximale prédéterminée d'au moins 90 %, par exemple d'au moins 95 %, de préférence 100 % et les valeurs tonales restantes de l'épreuve couleur respective sont augmentées en conséquence.

7. Procédé selon l'une quelconque des revendications 1 à 6, dans lequel, dans l'étape de procédé d), les valeurs tonales restantes de l'épreuve couleur respective sont augmentées linéairement.

8. Procédé de fabrication de cylindres d'impression d'une machine d'impression pour l'impression analogique multicolore de décorations de surface sur des supports plats, par exemple des films ou des papiers,
dans lequel on utilise, pour la gravure des cylindres, des données de gravure qui sont générées ou créées par un procédé selon l'une quelconque des revendications 1 à 7.

9. Procédé pour imprimer des décors en impression analogique avec des cylindres d'impression, en particulier dans un procédé d'héliogravure, dans lequel les cylindres d'impression sont fabriqués par un procédé selon la revendication 8.

10. Procédé pour imprimer des décors en impression numérique et analogique, dans lequel les données d'impression pour l'impression numérique d'une part et pour la gravure des cylindres d'impression d'autre part pour l'impression analogique multicolore peuvent être générées par un procédé selon l'une quelconque des revendications 2 à 7.

11. Procédé selon la revendication 9 ou 10, dans lequel on imprime avec les cylindres d'impression ayant des couleurs de base pures ou coupées sensiblement pures de l'espace colorimétrique de base.
